# DEMANDE DE BREVET EUROPEEN

(11) **EP 1 182 489 A1**
(43) Date de publication de la demande: **27.02.2002**
(21) Numéro de dépôt: 01402154.7
(22) Date de dépôt: 10.08.2001
(51) Int. Cl.: G02C 9/00

(54) **Ecran auxiliaire amovible associé à une paire de lunettes du type à monture filaire**

(30) Priorité: 22.08.2000 FR 0010798
(71) Demandeur: Timon, 91310 Linas (FR)
(72) Inventeur: Dalex, Robert, 91660 Mereville (FR); Tiberghien, Hervé, 06500 Menton (FR)
(74) Mandataire: Jaunez, Xavier

(57) **Abrégé**

La présente invention concerne un écran auxiliaire amovible (20) associé à une paire de lunettes (1).

Conformément à l'invention, l'écran auxiliaire (20) comporte des moyens (18) coopérant avec des moyens homologues (11) portés par la paire de lunettes (1) pour permettre un montage direct et amovible dudit écran en arrière des verres (6, 7) de la paire de lunettes, de préférence à distance de la face arrière desdits verres. Dans le cas de lunettes à monture filaire non-entourante fixée aux verres par des boulons traversants (8) dont les écrous associés (11) sont en arrière des verres, lesdits écrous sont conformés pour présenter une portion à section réduite au voisinage du verre associé, et l'écran auxiliaire (20) présente des perçages (18) pour permettre un clipsage direct et amovible dudit écran sur les écrous (11) concernés.

## Description

La présente invention concerne le domaine des lunettes, et plus particulièrement un écran auxiliaire amovible associé à une paire de lunettes.

Dans le domaine particulier des verres filtrants ou solaires, on a proposé déjà de nombreuses solutions pour équiper une paire de lunettes d'un écran auxiliaire amovible qui est soit réalisé sous une forme unitaire soit sous forme de verres indépendants.

On connaît ainsi des clips solaires tenus par des griffes ou crochets, et on pourra se référer à ce titre au document WO 98/39681 pour des clips réalisés sous forme de verres indépendants, et au document WO 95/18987 pour un écran réalisé sous forme d'un ensemble unitaire à deux verres reliés par une branche centrale. Dans les deux cas, l'écran auxiliaire amovible est accroché sur la monture ou les verres de la paire de lunettes par des griffes, ledit écran étant bien entendu positionné en face avant des verres de lunettes.

On pourra également se référer au document US-A-5 975 692 qui décrit le clipsage par le centre, en face avant, d'un écran filtrant, au moyen d'un clip s'accrochant sur le nez de la monture. Le document US-A-5 920 369 décrit un autre type de clip solaire de face avant pour monture filaire. Le document US-A-5 894 335 décrit un autre type de clip solaire monté en face avant par encliquetage sur les branches. Les documents WO-00/33124 et FR-A-2 782 396 décrivent des clips solaires qui sont fixés au moyen d'aimants latéraux à la monture de lunettes. Le document EP-A-0 862 074 décrit un écran solaire monté en face avant d'une paire de lunettes, ledit écran présentant des doigts qui viennent s'insérer dans des fentes associées (en forme de trou de serrure pour le verrouillage) des verres de la paire de lunettes.

Enfin, on peut citer des réalisations à verres indépendants montés en face avant des verres de lunettes, en particulier les documents WO-A-00/29899 et US-A-5 936 700 qui décrivent des écrans auxiliaires amovibles réalisés sous forme de deux verres indépendants dont chacun présente deux inserts latéraux à passage central pour un enfichage en face avant sur des pions en saillie sur chacun des verres de lunettes, le maintien en place de chaque écran auxiliaire étant assuré par un élément latéral fixé sur un insert et se terminant par un aimant coopérant avec une pastille métallique fixée sur la monture, au voisinage de chaque charnière d'articulation. Le document US-A-5 764 333 décrit enfin un écran auxiliaire amovible constitué de deux verres indépendants appliqués directement contre la face frontale des verres par les seules forces électrostatiques.

Pour compléter l'arrière-plan technologique, on peut enfin citer le document EP-A-1 024 390 décrivant des perçages d'anti-rotation pour les verres de lunettes (non munies d'écran auxiliaire) et le document WO-A-97/21 133 décrivant le montage de verres au moyen d'encoches pratiquées dans la face avant de chaque verre.

Finalement, en dehors du document US-A-5 764 333 pour lequel les verres indépendants de l'écran auxiliaire amovible rapportés en face avant qui tiennent par la seule force électrostatique, l'ensemble des écrans auxiliaires rapportés précités comporte systématiquement des éléments de fixation qui sont apparents en face avant, ce qui nuit à l'esthétique, et de plus la fixation de ces écrans n'est pas toujours très fiable, et, selon le cas, elle peut même rayer les verres de la paire de lunettes ainsi équipée.

L'invention a pour objet de concevoir un écran auxiliaire amovible associé à une paire de lunettes ne présentant pas les inconvénients et limitations précités, et procurant en particulier à la fois une tenue fiable de l'écran sur la paire de lunettes concernée, avec une facilité de mise en place dudit écran tant pour le montage que le démontage, et enfin avec une esthétique aussi discrète que possible. De plus, lorsque l'écran est teinté et/ou filtrant (par exemple un écran solaire), on cherche à favoriser une efficacité optimale de la filtration.

Ce problème est résolu conformément à l'invention grâce à un écran amovible comportant des moyens coopérant avec des moyens homologues portés par la paire de lunettes pour permettre un montage direct et amovible dudit écran en arrière des verres de la paire de lunettes, de préférence à distance de la face arrière desdits verres.

Ainsi, pour la première fois, un écran auxiliaire amovible est monté en arrière des verres, de préférence à distance de la face arrière desdits verres. Les essais réalisés par la demanderesse tendent à montrer que le porteur des lunettes ainsi équipées ne fait aucune différence avec un écran qui serait monté en face avant. D'ailleurs, avec des écrans solaires, on obtient même une efficacité supérieure, grâce à une diminution très importante des réflexions parasites.

Dans le cas particulier d'une paire de lunettes du type à monture filaire, où la monture filaire est non-entourante et fixée aux verres de lunettes par des boulons traversants dont les écrous associés sont disposés en arrière des verres, il est alors avantageusement prévu que lesdits écrous soient conformés pour présenter une portion à section réduite au voisinage du verre associé, et que l'écran auxiliaire présente des perçages qui sont dimensionnés pour permettre un clipsage direct et amovible dudit écran sur les écrous concernés.

L'écran auxiliaire amovible pourra être constitué de deux verres indépendants dont chacun présente au moins deux perçages en vue de leur clipsage individuel, ou en variante par un ensemble unitaire formé de deux verres reliés par un pontet central, chacun desdits verres présentant au moins un perçage en vue de leur clipsage individuel.

En particulier, dans le cas d'une monture filaire constituée par un ensemble central formant un pontet et deux branches porte-plaquettes et par deux ensembles latéraux formant des branches articulées, ladite monture filaire étant fixée à chaque verre associé par deux boulons traversants, il sera avantageusement prévu que chaque verre de l'écran auxiliaire amovible présente alors deux perçages en vue de leur clipsage individuel sur les écrous des boulons traversants.

Avantageusement alors, que chaque verre dudit écran présente en outre une encoche latérale débouchante associée au passage de la branche porte-plaquette concernée. On est ainsi assuré d'une parfaite tenue de l'écran auxiliaire clipsé.

De préférence encore, les perçages dudit écran présentent des élargissements et/ou des incisions radiales pour faciliter le clipsage sur les écrous concernés.

Les écrous pourront avoir une forme de boule à embout polygonal, ledit embout formant entretoise pour maintenir l'écran à distance de la face arrière des verres de lunettes lorsque ledit écran est monté, ou encore en variante une forme de boule à facettes latérales.

Les verres constituant l'écran auxiliaire amovible pourront être teintés et/ou filtrants, et en particulier être des verres solaires, de préférence en polycarbonate.

D'autres caractéristiques et avantages de l'invention apparaîtront plus clairement à la lumière de la description qui va suivre et du dessin annexé, concernant un mode de réalisation particulier, en référence aux figures où :
- la figure 1 est une vue en perspective éclatée montrant un écran auxiliaire amovible prêt à être monté sur une paire de lunettes, qui est ici du type à monture filaire, et en arrière et à distance des verres, conformément à l'invention,
- la figure 2 est une vue de dessus partielle de l'agencement de la figure 1,
- la figure 3 est une coupe selon III-III de la figure 2, à plus grande échelle, permettant de mieux distinguer la géométrie particulière de l'écrou conformé pour le clipsage de l'écran,
- la figure 4 est une vue en perspective de l'écrou précité,
- la figure 5 illustre en élévation trois variantes de réalisation d'un écrou conformé pour le clipsage d'un écran auxiliaire amovible,
- la figure 6 est une vue en perspective illustrant l'un des verres constitutifs de l'écran auxiliaire précité,
- la figure 7 est une vue en perspective à rapprocher de celle de la figure 1, les verres constitutifs de l'écran auxiliaire amovible étant représentés en position clipsée, position prête à l'emploi,
- la figure 8, et la coupe associée selon IX-IX de la figure 9, sont à rapprocher des figures 2 et 3, et illustrent un verre constitutif de l'écran en position montée.

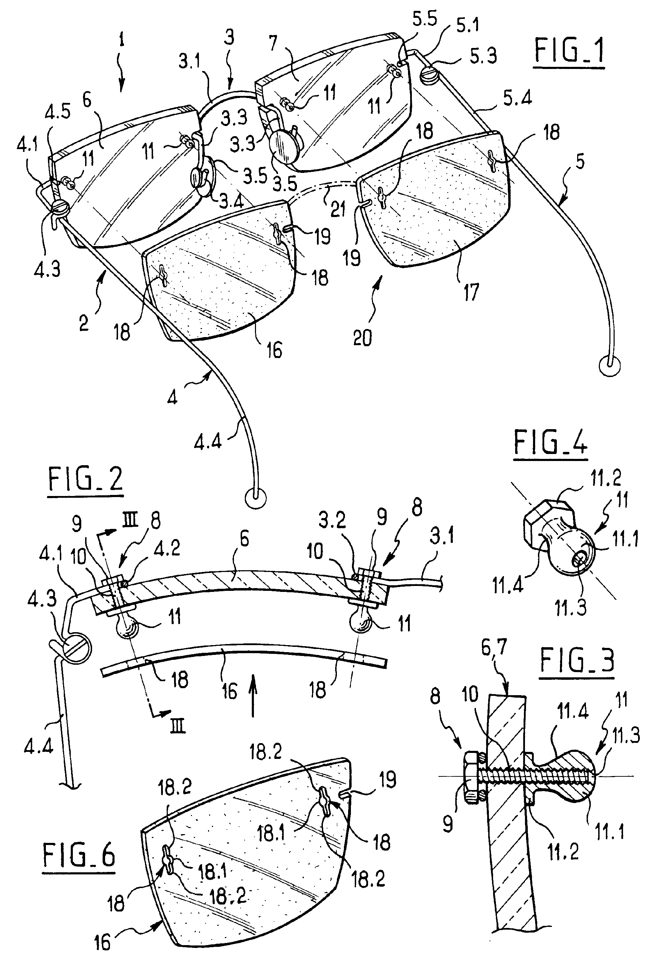

Les figures 1 et 2 permettent de distinguer une paire de lunettes 1 qui est ici du type à monture filaire 2. La monture filaire 2 est non entourante, et elle est constituée par un ensemble central 3 et deux ensembles latéraux 4, 5. L'ensemble central 3 est un ensemble filaire, par exemple en titane, et comporte une portion centrale 3.1 formant un pontet, puis deux boucles d'accrochage en U 3.2 auxquelles se raccordent deux branches arrière pliées 3.3 se terminant par un oeillet ouvert 3.4 servant à fixer une plaquette de nez 3.5. Les deux ensembles latéraux 4, 5 sont de réalisation symétrique par rapport à un plan médian de la paire de lunettes, et comportent une portion frontale en équerre 4.1, 5.1 présentant une boucle d'accrochage en U 4.2, 5.2 se terminant par un tronçon 4.5, 5.5, l'autre extrémité se présentant sous la forme d'une charnière 4.3, 5.3, à laquelle se raccorde une partie de branche latérale 4.4, 5.4. Les ensembles latéraux 4 et 5 sont de préférence réalisés à partir du même fil que l'ensemble central formant pontet 3, en particulier un fil titane.

La monture filaire 2 ainsi constituée est fixée à chaque verre associé noté 6, 7 de la paire de lunettes 1 par des boulons traversants 8. Ainsi que cela est mieux visible sur les figures 2 et 3, chaque boulon 8 comprend une tête de boulon 9 en face avant des verres de la paire de lunettes, une tige filetée 10 passant dans un perçage associé du verre 6 ou 7, et, en face arrière desdits verres, un écrou de serrage noté 11.

Conformément à une caractéristique de l'invention, les écrous 11, disposés en face arrière des verres 6, 7, sont conformés pour présenter une portion à section réduite au voisinage du verre associé, et un écran auxiliaire noté 20 est prévu pour équiper la paire de lunettes 1, ledit écran auxiliaire présentant des perçages 18 qui sont dimensionnés pour permettre un clipsage direct et amovible dudit écran sur les écrous 11 concernés.

On met ainsi en oeuvre la caractéristique essentielle de l'invention, selon laquelle l'écran auxiliaire 20 comporte des moyens (perçages 18) coopérant avec des moyens homologues (écrous 11) portés par la paire de lunettes 1 pour permettre un montage direct et amovible dudit écran en arrière des verres 6, 7 et de préférence à distance de la face arrière de ceux-ci. On pourra naturellement remplacer le montage par clipsage, par un montage par ventouses ou aimants, ou un montage sur la tige filetée des boulons (avec fixation par écrous en arrière de l'écran).

L'écran auxiliaire amovible 20 peut être constitué comme cela est illustré sur les figures 1 et 2, par deux verres indépendants 16, 17 dont chacun présente au moins deux perçages 18 en vue de leur clipsage individuel. En variante, on pourra prévoir que l'écran auxiliaire amovible 20 est constitué par un ensemble unitaire formé de deux verres 16, 17 reliés par un pontet central 21 (représenté seulement en trait mixte sur la figure 1), chacun desdits verres présentant alors au moins un perçage 18 en vue de leur clipsage individuel.

En l'espèce, la monture filaire 2 étant fixée à chaque verre associé 6, 7 par deux boulons traversants 8, chaque verre 16, 17 de l'écran auxiliaire amovible 20 présente alors deux perçages 18 en vue de leur clipsage individuel. La géométrie des perçages 18 est mieux visible sur la vue de la figure 6, et l'on constate que chaque perçage présente des élargissements visant à faciliter le clipsage sur les écrous concernés 11. Chaque perçage 18 est ainsi constitué d'une partie centrale circulaire 18.1 se prolongeant par deux lumières oblongues 18.2 diamétralement opposée, lesdites lumières étant ici agencées sensiblement verticalement. On pourra en variante prévoir des incisions radiales destinées à assurer la même fonction. Les perçages 18 présentant des élargissements et/ou des incisions radiales sont ainsi tout à fait aptes à un clipsage avec montage et démontage répétés, sans risque d'altérer les verres constitutifs de l'écran auxiliaire amovible au niveau desdits perçages.

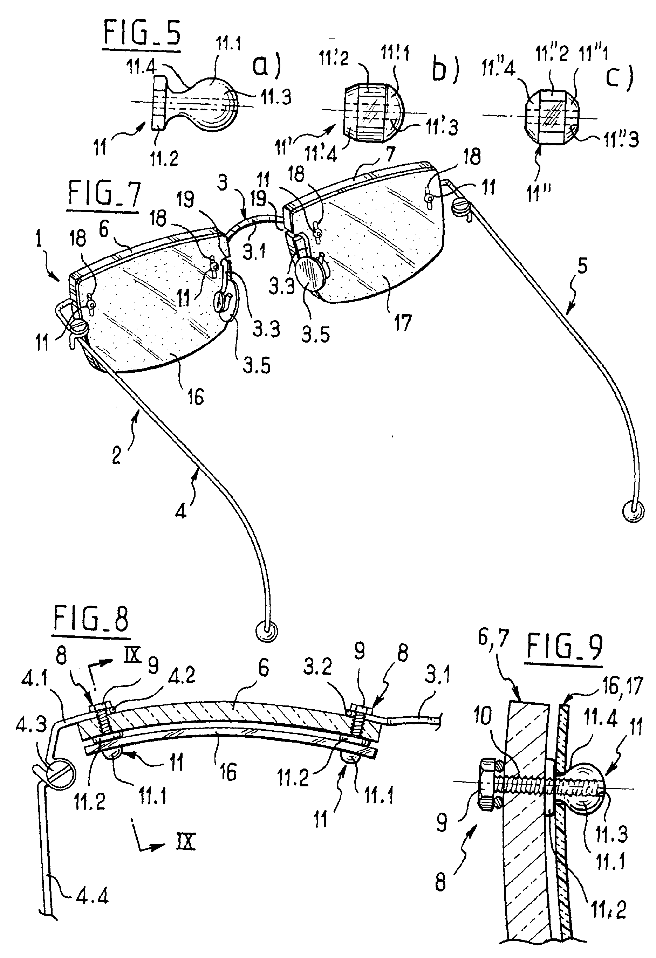

Sur les figures 3 et 4, on constate que l'écrou 11 représenté a une forme de boule à embout de manoeuvre polygonal (ici hexagonal), ledit embout formant entretoise pour maintenir l'écran auxiliaire amovible 20 à distance de la face arrière des verres de lunettes lorsque ledit écran auxiliaire est monté. L'écrou 11 présente ainsi une partie principale sensiblement sphérique 11.1 se prolongeant par un embout polygonal 11.2 formant écrou et entretoise, l'ensemble étant traversé par un taraudage central 11.3. La partie essentielle de l'écrou 11, notée 11.4, est la portion à section réduite qui sert à retenir l'écran auxiliaire une fois ledit écran clipsé sur l'écrou 11. La figure 7 illustre l'ensemble ainsi monté, avec une paire de lunettes équipée de deux verres 16, 17 montés en arrière des verres 6, 7 de la paire de lunettes, et à distance de la face arrière de ceux-ci.

Les figures 8 et 9 permettent de constater que l'embout hexagonal 11.2 des écrous 11 forme bien entretoise avec les verres de lunettes 6, 7 lorsque l'écran 20 est monté. Le montage à distance assure la présence d'un espace intermédiaire garantissant la ventilation (donc évitant la formation de buée) et évitant toute formation de rayure par contact avec les verres de lunettes, en particulier si une particule tel qu'un grain de sable était présent sur une surface.

On pourra naturellement envisager d'autres formes pour l'écrou de serrage 11, à condition toutefois que la géométrie préserve la présence de la portion à section réduite pour le clipsage de l'écran auxiliaire amovible 20. Sur la figure 5, on a ainsi illustré trois géométries envisageables, avec en a) la géométrie précédemment décrite pour l'écrou 11 et en b) et c) deux écrous 11' et 11" se présentant sous la forme d'une boule à facettes latérales de manoeuvre. Les écrous 11' et 11" présentent ainsi une portion principale 11'.1, 11".1 avec des facettes latérales 11'.2, 11".2, permettant le serrage de l'écrou au moyen d'un outil adapté, puis un taraudage central 11'.3, 11".3, et enfin une portion à section réduite 11'.4, 11".4.

On pourra noter par ailleurs que chaque verre 16, 17 de l'écran auxiliaire amovible 20 présente en outre une encoche latérale débouchante 19. Cette encoche latérale débouchante 19 est associée au passage de la branche porte-plaquette concernée 3.3.

Les verres 16, 17 constituant l'écran auxiliaire amovible 20 pourront être teintés et/ou filtrants, et il s'agira en particulier de verres solaires.

Dans la présente description, on a parlé de "verres" pour l'écran auxiliaire amovible mais il est entendu que le matériau constitutif utilisé pourra être de la matière plastique, en particulier du polycarbonate ou de l'acétate, teinté dans la masse.

Les essais et mesures effectués par la demanderesse montrent qu'avec un écran solaire, on obtient, avec le montage de l'écran en arrière et à distance des verres, un confort nettement amélioré par rapport à tous les montages classiques en face avant des verres (les réflexions parasites sont en effet réduites de plus de la moitié).

L'invention n'est pas limitée au mode de réalisation qui vient d'être décrit, mais englobe au contraire toute variante reprenant, avec des moyens équivalents, les caractéristiques essentielles énoncées plus haut.

En particulier, l'invention s'applique également à des écrans auxiliaires amovibles pouvant équiper des montures de lunettes non filaires, la monture étant alors adaptée pour présenter des moyens adéquats permettant le montage direct et amovible d'un écran en arrière et de préférence à distance des verres de lunettes.

## Revendications

1. Ecran auxiliaire amovible (20) associé à une paire de lunettes (1), **caractérisé en ce qu'**il comporte des moyens (18) coopérant avec des moyens homologues (11) portés par la paire de lunettes (1), pour permettre un montage direct et amovible dudit écran en arrière des verres (6, 7) de la paire de lunettes, de préférence à distance de la face arrière desdits verres.

2. Ecran auxiliaire amovible (20) selon la revendication 1, associé à une paire de lunettes (1) du type à monture filaire, la monture filaire (2) étant non-entourante et étant fixée aux verres de lunettes (6, 7) par des boulons traversants (8) dont les écrous associés (11) sont disposés en arrière des verres (6, 7), **caractérisé en ce que** les écrous (11) sont conformés pour présenter une portion à section réduite au voisinage du verre associé, et l'écran auxiliaire (20) présente des perçages (18) qui sont dimensionnés pour permettre un clipsage direct et amovible dudit écran sur les écrous (11) concernés.

3. Ecran auxiliaire amovible selon la revendication 2, **caractérisé en ce qu'**il est constitué de deux verres indépendants (16, 17) dont chacun présente au moins deux perçages (18) en vue de leur clipsage individuel.

4. Ecran auxiliaire amovible selon la revendication 2, **caractérisé en ce qu'**il est constitué par un ensemble unitaire formé de deux verres (16, 17) reliés par un pontet central (21), chacun desdits verres présentant au moins un perçage (18) en vue de leur clipsage individuel.

5. Ecran auxiliaire amovible selon la revendication 4, associé à une paire de lunettes dont la monture filaire (2) est constituée par un ensemble central (3) formant un pontet (3.1) et deux branches porte-plaquettes (3.3) et par deux ensembles latéraux (4, 5) formant des branches articulées (4.4, 5.4), ladite monture filaire étant fixée à chaque verre associé (6, 7) par deux boulons traversants (8), **caractérisé en ce que** chaque verre (16, 17) de l'écran auxiliaire amovible (20) présente alors deux perçages (18) en vue de leur clipsage individuel sur les écrous (11) des boulons traversants (8).

6. Ecran auxiliaire amovible selon la revendication 5, **caractérisé en ce que** chaque verre (16, 17) dudit écran présente en outre une encoche latérale débouchante (19) associée au passage de la branche porte-plaquette concernée (3.3).

7. Ecran auxiliaire amovible selon l'une quelconque des revendications 2 à 6, **caractérisé en ce que** les perçages (18) dudit écran présentent des élargissements et/ou des incisions radiales pour faciliter le clipsage sur les écrous concernés (11).

8. Ecran auxiliaire amovible selon l'une quelconque des revendications 2 à 7, **caractérisé en ce que** les écrous (11) ont une forme de boule à embout polygonal (11.2), ledit embout formant entretoise pour maintenir l'écran à distance de la face arrière des verres de lunettes lorsque ledit écran est monté.

9. Ecran auxiliaire amovible selon l'une quelconque des revendications 2 à 8, **caractérisé en ce que** les écrous (11', 11") ont une forme de boule à facettes latérales (11'.2, 11".2).

10. Ecran auxiliaire amovible selon l'une quelconque des revendications 2 à 9, **caractérisé en ce que** les verres (16, 17) constituant ledit écran sont teintés et/ou filtrants.

11. Ecran auxiliaire amovible selon la revendication 10, **caractérisé en ce que** les verres (16, 17) constituant ledit écran sont des verres solaires, de préférence en polycarbonate.
